(19) Europäisches Patentamt
European Patent Office
Office européen des brevets

(11) Numéro de publication : **0 206 940 B1**

# (12) FASCICULE DE BREVET EUROPEEN

(45) Date de publication du fascicule du brevet : **27.02.91 Bulletin 91/09**

(51) Int. Cl.[5] : **G05B 19/405**

(21) Numéro de dépôt : **86401357.8**

(22) Date de dépôt : **20.06.86**

(54) **Procédé de commande d'une échelle sur véhicule.**

(30) Priorité : **21.06.85 FR 8509463**

(43) Date de publication de la demande : **30.12.86 Bulletin 86/52**

(45) Mention de la délivrance du brevet : **27.02.91 Bulletin 91/09**

(84) Etats contractants désignés : **AT CH DE GB IT LI**

(56) Documents cités :
**EP-A- 0 154 069**
**FR-A- 2 501 390**

(73) Titulaire : **CAMIVA**
**Boite Postale 16**
**F-73230 Saint-Alban-Leysse (FR)**

(72) Inventeur : **Artaud, Claude**
**99, rue J. Denarié**
**F-73190 Challes-les-Eaux (FR)**
Inventeur : **Vincent, Michel**
**405, Rue des Ecoles**
**F-73230 Saint-Alban-Leysse (FR)**

(74) Mandataire : **Saint Martin, René et al**
**Régie Nationale des Usines Renault Direction des Recherches et Développements Service 0804 8-10, Avenue Emile-Zola**
**F-92109 Boulogne Billancourt Cedex (FR)**

**EP 0 206 940 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à un procédé de commande des mouvements d'une échelle sur véhicule notamment d'une échelle de sauvetage et de lutte contre l'incendie, comportant une échelle formée de plusieurs éléments pouvant être déployés ou reployés par un premier actionneur et pouvant être dressée par pivotement autour d'un axe sensiblement horizontal, par l'intermédiaire d'un deuxième actionneur et orientée, autour d'un axe sensiblement vertical, par l'intermédiaire d'un troisième actionneur, et un système électronique à microprocesseur recevant en entrée les signaux d'un pupitre de commande muni d'organes de commande manuelle dont le sens et l'amplitude de déplacement correspondent respectivement au sens et à la vitesse de mouvement du dressage-abaissement, de déploiement-reploiement et d'orientation et les signaux représentatifs de la charge utile appliquée à l'échelle, de la longueur développée et de l'angle d'orientation et générant en sortie des signaux servant à commander lesdits actionneurs.

Le brevet français FR-A-2501390 décrit un dispositif de commande pour une échelle sur véhicule du type précédent. L'opérateur dispose pour chaque commande de mouvement d'un organe de commande (levier) dont le sens et l'amplitude de déplacement correspondent respectivement au sens et à la vitesse d'exécution du mouvement. Chaque organe de commande fournit un signal électrique représentatif du sens de commande et de la vitesse du mouvement, à un microprocesseur comportant en mémoire les valeurs maximales à ne pas dépasser en fonction de divers paramètres sélectionnables et prédéterminés de mise en service de l'échelle et une loi de décélération des mouvements dans les zones terminales d'approche de la portée maximale considérée. Ce dispositif assure une variation linéaire des vitesses angulaires ou linéaires en fonction du déplacement de l'organe de commande.

Le brevet européen 0154069 décrit également un dispositif de commande permettant un contrôle manuel à des vitesses reduites mais ne concerne pas un procédé automatique.

On limite les vitesses d'évolution de manière à éviter au personnel transporté les désagréments qui pourraient résulter des accélérations ou décélérations importantes. Les vitesses maximales correspondent aux limites admissibles pour la longueur développée et de la charge utile maximales. Il s'en suit, pour les valeurs moindres de longueur développée et de charge utile, une relative lenteur des mouvements de dressage-abaissement et de pivotement puisque, pour ces mouvements, il correspond à la vitesse des actionneurs, une vitesse angulaire de l'échelle.

La présente invention permet une variation de la vitesse maximale angulaire du mouvement de dressage-abaissement lorsque la longueur développée et la charge utile varient, une variation de la vitesse maximale angulaire du mouvement de pivotement lorsque la portée et la charge utile varient, une variation de la vitesse de déploiement-reploiement lorsque la charge varie. L'invention permet d'accroître les vitesses des mouvements tout en assurant le confort des passagers éventuels et en limitant les effets dynamiques générateurs d'efforts et de déformation qui nuisent à la précision des manoeuvres. L'invention permet une plus grande précision de réglage des faibles vitesses ce qui est particulièrement important pour les manoeuvres d'accostage.

Le procédé selon l'invention est caractérisé par le fait le système électronique calcule :

– à partir des signaux desdits capteurs, un premier coefficient de vitesse $K_\alpha$ (L) qui est une fonction décroissante de la longueur développée, un second coefficient de vitesse K (M) qui est une fonction décroissante de la charge utile et un troisième coefficient de vitesse $K_\theta$ (P) qui est une fonction décroissante du rayon de giration de l'échelle, le rayon de giration étant une fonction de la longueur développée (L) et de l'angle de dressage ($\alpha$) ;

– ensuite une valeur de vitesse maximale de dressage-abaissement ($V_\alpha$ max (L, M) à partir d'une première valeur de vitesse maximale prédéterminée en fonction de la longueur développée minimum et de la charge utile minimum et pondérée par lesdits premier et second coefficients ($K_\alpha$ (L), K (M) ;

– une valeur de vitesse maximale d'orientation, ($V_\theta$ max (P, M) à partir d'une deuxième valeur de vitesse maximale prédéterminée en fonction du rayon de giration minimum et de la charge utile minimum et pondérée par ledit second coefficient et ledit troisième coefficient et

– enfin, des vitesses de commande pour lesdits actionneurs à partir desdits coefficients et desdites vitesses maximales de façon que lesdites vitesses de commande n'excèdent pas les vitesses maximales ainsi calculées.

Selon une caractéristique, le procédé consiste à calculer une valeur de vitesse maximale de déploiement-reploiement ($V_{Lmax(M)}$ à partir d'une troisième valeur de vitesse maximale prédéterminée en fonction de la charge utile minimum et pondérée par ledit second coefficient.

Selon une autre caractéristique l'amplitude du déplacement ($C_\alpha$, $C_\theta$, $C_L$) de l'organe de commande est liée aux vitesses de commande par une loi de vitesse dont les paramètres sont fonction desdites vitesses maximales calculées.

Selon une autre caractéristique, la loi de vitesse est telle que le gain entre l'amplitude du déplacement ($C_\alpha$, $C_\theta$, $C_L$) de l'organe de commande et la vitesse de commande correspondante ($V_\alpha$, $V_\theta$, $V_L$) varie entre les faibles vitesses et les grandes vitesses et que la précision de réglage des faibles vitesses soit meilleure que celle des grandes vitesses.

L'invention va maintenant être décrite avec plus de détails en se référant aux dessins annexés sur lesquels :

– la figure 1 est une vue schématique d'une échelle sur véhicule indiquant les paramètres de fonctionnement ;

– la figure 2 est un schéma simplifié du système de commande hydraulique ;

– la figure 3 est un schéma général d'ensemble des entrées et des sorties d'un microprocesseur utilisé dans le cadre de l'invention ;

– la figure 4 représente la constitution générale du système à microprocesseur servant à la commande des mouvements selon l'invention ;

– la figure 5 est un organigramme simplifié des opérations effectuées par le système électronique à microprocesseur ;

– la figure 6 représente une loi de variation du coefficient de vitesse maximale $K_\alpha$ (L) en fonction de la longueur développée L ;

– la figure 7 représente une loi de variation du coefficient de vitesse maximale K (M) en fonction de la charge utile M ;

– la figure 8 représente une loi de variation du coefficient de vitesse maximale du mouvement d'orientation en fonction du rayon de giration $\rho$ ;

– la figure 9 donne une loi de variation de la vitesse du mouvement de dressage-abaissement conformément à l'invention ;

– la figure 10 donne une loi de variation de la vitesse du mouvement d'orientation conformément à l'invention ;

– la figure 11 donne une loi de variation de la vitesse du mouvement de déploiement-reploiement conformément à l'invention ;

– la figure 12 donne un organigramme de calcul de la vitesse demandée.

L'échelle sur véhicule représentée sur la figure 1 et divulguée par le brevet français précité comporte un véhicule porteur 1 sur lequel est monté l'échelle repérée 2.

Le véhicule porteur 1 supporte une tourelle d'orientation 3 qui peut pivoter ou être orientée autour d'un axe vertical 3a. Cette tourelle porte une partie 31 articulée autour d'un axe horizontal 3b. Le support d'échelle 21 - appelé berceau - est articulé sur cette partie 31autour d'un axe horizontal 2a. L'échelle 2 se compose de plusieurs tronçons 22, 23, 24, 25 qui sont télescopiques et à développement simultané. A l'extrémité de l'échelle est monté un panier 26 (ou une plateforme amovible) qui est articulé sur le tronçon supérieur 25 autour d'un axe 27. Ce panier sert à transporter des personnes.

La stabilité du véhicle pendant l'utilisation de l'échelle est assurée par des vérins de calage 12 montés sur des poutres-support télescopiques 11. L'orientation de la partie 31 permet de maintenir l'axe des éléments d'échelle dans un plan vertical même lorsque le véhicule est incliné.

Le support d'échelle 21 en pivotant autour de l'axe 2a permet de faire varier l'angle de dressage de l'échelle qui est désigné par $\alpha$. La vitesse du mouvement de dressage est designée par $V_\alpha$. L'angle d'orientation de la tourelle 3 est désigné par $\theta$ et la vitesse angulaire est désignée par $V_\theta$. La longueur développée de l'échelle est désignée par L et la vitesse linéaire de l'extrémité de l'échelle est désignée par $V_L$.

La charge constituée par les personnes portées est dite charge utile et elle est désignée par M. Le rayon de giration (distance entre la direction de la charge et l'axe 3a) est désigné par $\rho$.

La figure 2 représente le shéma simplifié du circuit hydraulique de commande des mouvements, connu du même document français.

Le circuit hydraulique commande les actionneurs 57, 58, 59 qui servent à manoeuvrer l'échelle. L'actionneur 57 est un moteur hydraulique qui actionne le treuil servant à commander le déploiement-reploiement. Les vérins 59 servent à commander le dressage-abaissement. Le moteur hydraulique 58 commande l'orientation de la tourelle.

Une pompe à débit variable 51 alimente, à partir d'un réservoir 52, les actionneurs 57, 58, 59 par l'intermédiaire d'électrodistributeurs 53, 54, 55. L'électrodistributeur 53 contrôle l'alimentation du moteur hydraulique 57. L'électrodistributeur 54 contrôle l'alimentation des vérins 59 de dressage-abaissement. L'électrodistributeur 55 contrôle l'alimentation du moteur hydraulique 58.

Chacun des électrodistributeurs délivre un débit proportionnel à la tension fournie aux bobines. Un électrodistributeur 56 (mis sous tension dès qu'un électrodistributeur 53 à 55 est mis sous tension) permet d'envoyer à la pompe 52 l'information de pression maximale dans les circuits ce qui modifie la cylindrée de la pompe de façon à ce qu'elle délivre juste le débit nécessaire à l'utilisation à la pression régnant dans le circuit d'utilisation. En l'absence de commande de cet électrodistributeur, le débit de la pompe est nul.

Les mouvements sont commandés par l'opérateur à partir d'un pupitre de commande 4 représenté à la figure 3. Ce pupitre comporte deux leviers 41 et 42 de commande manuelle des mouvements. Le sens et l'amplitude du déplacement $C_\alpha$ du levier 41 correspondent respectivement au sens de dressage-abaissement et à sa vitesse anglaire $V_\alpha$. Le sens et l'amplitude du déplacement $C_\theta$ du levier 41 correspondent respectivement au sens d'orientation (droite ou gauche) et à sa vitesse angulaire $V_\theta$. Le sens et l'amplitude $C_L$ du déplacement du levier 42 correspondent respectivement au sens du mouvement de déploiement-reploiement et à sa vitesse linéaire $V_L$.

Les signaux de commande venant du pupitre de commande 4 sont envoyés à un système électronique à microprocesseur représenté par les figures 3 et 4. Ce système électronique reçoit par ailleurs les signaux représentatifs de la charge utile de la longueur développée et de l'angle d'orientation. Pour la charge utile, le signal peut être fourni par un capteur de mesure de la charge ou par un système de sélection de charge utile permettant à l'opérateur de choisir à partir du pupitre 4 entre plusieurs valeurs discrètes de la charge utile. Ainsi à titre indicatif en appuyant sur les boutons 43, 44, 45 qui correspondent à la présence d'un, deux, trois hommes dans le panier, l'opérateur détermine la charge utile.

Les commandes des divers mouvements sont assurées par l'intermédiaire d'un microprocesseur M P U et peuvent l'être selon des dispositions particulières ayant fait l'objet de la demande de brevet français FR-A-2501390. En bref, les informations de position délivrées par différents capteurs sont lues périodiquement par le microprocesseur et mises en mémoire. Le microprocesseur traite ces données et compare l'état de l'échelle à des limites d'utilisation stockées en mémoire permanente. Les ordres de commande des mouvements donnés par l'opérateur sous forme de signaux électriques représentatifs du sens et de la vitesse de commande sont envoyés au microprocesseur ; ils sont validés ou modifiés selon le résultat de la comparaison de l'état de l'échelle aux limites d'utilisation précitées puis transmis aux organes de commande des actionneurs, en faisant notamment intervenir une décélération progressive des mouvements avant l'arrêt total.

Le système électronique à microprocesseur illustré par la figure 4 comprend :

– un microprocesseur (MPU) 61 qui coordonne toutes les fonctions du système et possède une mémoire de travail interne.

– deux mémoires programmables (REPROM) 62 et 63. La totalité du programme permettant la commande et le contrôle du fonctionnement de l'échelle est enregistré dans ces mémoires.

– une mémoire de travail externe (RAM) 64. C'est dans cette mémoire que sont stockés les paramètres extérieurs et les résultats de calcul.

– des interfaces 65 et 66 d'adaptation des entrées et sorties à codage d'adresse (PIA et PIA 2).

Ces composants sont reliés par des BUS usuels :

– BUS des DONNEES (ensemble de fils véhiculant les informations d'entrées sorties ou mémoire).

– BUS des ADRESSES (ensemble de fils comportant le codage des emplacements ou destinations des informations véhiculées par le BUS des DONNEES).

– BUS de COMMANDE (ensemble de fils par lesquels cheminent les signaux de commande auxiliaires validant les adresses et transfert des données).

Les ordres de commande des trois mouvements de l'échelle sont de type analogique et appliqués sous forme de tensions électriques aux bornes d'entrée $E_1$ à $E_3$ d'un multiplexeur 71. Le signal appliqué à l'entrée $E_1$ est contrôlé par le levier 41 de commande de dressage-abaissement. Le signal appliqué à l'entrée $E_2$ est contrôlé par le levier 41 de commande d'orientation. Le signal appliqué à l'entrée $E_3$ est contrôlé par le levier 42 de commande de déploiement-reploiement.

D'autres entrées analogiques sont prises en compte parmi lesquelles : une entrée $E_4$ couplée à un codeur angulaire ou à un capteur potentiométyrique de mesure de l'angle de dressage $\alpha$ de l'échelle ; une entée $E_5$ couplée à un capteur angulaire de mesure de l'angle d'orientation $\theta$ ; une entrée $E_6$ couplée à un capteur de mesure de la longueur développée L ; une entrée $E_7$ couplée à l'organe de sélection de charge utile M ou au capteur de mesure de charge utile M.

Le multiplexeur 71 est suivi d'un convertisseur analogigue-numérique 72 relié à l'interface d'adaptation des entrées PIA 1 (référencé 65).

L'interface d'adaptation PIA 2 (référencée 66) coopère avec un circuit de commande des entrées 73 et avec un convertisseur numérique-analogique 74 à sortie analogique $S_1$, un convertisseur numérique-analogique 75 à sortie analogique $S_2$, un convertisseur numérique-analogique 76 à sortie analogique $S_3$. La sortie $S_1$ est couplée à l'électrodistributeur 54 commandant le dressage-abaissement. La sortie $S_2$ est couplée à l'électrodistributeur 53 commandant le déploiement-reploiement. La sortie $S_3$ est couplée à l'électrodistributeur 55 commandant l'orientation. Un décodeur 67 sert de démultiplexeur pour le circuit de commande des entrées 73 et pour les convertisseurs numérique-analogique 74 à 76.

La figure 5 représente l'organigramme général simplifié des opérations effectuées par le système électronique à microprocesseur :

– initialisation des mémoires,
– lecture des entrées et stockage en mémoire de travail,
– calculs notamment de la longueur développée.

Le programme comporte le contrôle successif des différents mouvements. Le principe de contrôle est le même pour tous les mouvements. Les mouvements d'abaissement, déploiement, dressage sont contrôlés de la façon suivante : le mouvement est-il demandé par l'opérateur (entrées $E_1$ à $E_3$) ? Si NON il y a maintien ou mise en position d'arrêt de ce mouvement. Si OUI poursuite du programme.

Dans le procédé selon l'invention, la vitesse maximale du mouvement de dressage ou abaissement est variable en fonction de la longueur développée ou de la charge utile et la vitesse du mouvement d'orientation est variable en fonction du rayon de giration et de la charge utile. De plus la vitesse maximum du mouvement de déploiement-reploiement est variable en fonction de la charge utile.

La vitesse maximale $V_\alpha$ max (L, M) de l'actionneur 59 du mouvement de dressage-abaissement pour une longueur développée L et une masse M peut être écrite sous la forme :

$$V_\alpha \max (L, M) = V_\alpha \max. (L \text{ mini}, 0) \times K_\alpha (L) \times K (M),$$

où $v\alpha$ max (L mini, 0) représente la vitesse maximale de référence de l'actionneur 59 pour une longueur développée L minimum et une charge utile M nulle et où $K_\alpha$ (L) est un premier coefficient de vitesse maximale donné par la figure 6 en fonction de la longueur développée L et où K (M) est un second coefficient de vitesse maximale donné par la figure 7 en fonction de la charge utile M. Le premier coefifficient de vitesse est une fonction décroissante de la longueur développée L. Le second coefficient de vitesse est une fonction décroissante de la charge utile M.

De même la vitesse maximale $V_\theta$ max de l'actionneur 58 du mouvement d'orientation peut être écrite sous la forme :

$$V_\theta \max (P, M) = V_\theta \max (\rho \text{ mini}, 0) \times K_\theta (\rho) \times K (M)$$

où $V_\theta$ max (ρ mini, 0) représente la vitesse maximale de référence de l'actionneur 58 pour un rayon de giration ρ minimum et une charge utile nulle et où $K_\theta$ (ρ) est un troisième coefficient de vitesse maximale donné par la figure 8 et où K (M) est le second coefficient donné par la figure 7. Le troisième coefficient de vitesse est une fonction décroissante du rayon de giration de l'échelle. Le rayon de giration ρ est calculé à partir de la longueur développée L et de l'angle de dressage α.

La vitesse maximale $V_L$ maxi de l'actionneur 57 de déploiement-reploiement peut être écrite sous la forme :

$$V_L \text{ maxi} (M) = V_L \max (0) \times K (M)$$

où $V_L$, max (0) représente la vitesse maximale de référence de l'actionneur 57 pour une charge utile nulle et où K (M) est le second coefficient de vitesse donné par la figure 7.

Le déplacement du levier de commande est lié à la vitesse demandée (le signal de commande de l'actionneur correspondant est proportionnel à cette vitesse) par une loi de vitesse linéaire ou non dépendant de la vitesse calculée.

La figure 9 montre la loi de variation de la vitesse $V_\alpha$de l'actionneur 59 du mouvement de dressage-abaissement en fonctionde l'amplitude $C_\alpha$ du levier 41 de commande pour les valeurs extrêmes de longueur développée L et de charge utile M dans le cas de l'échelle précédente. On voit que pour un déplacement $C_\alpha$ max la vitesse maximum qui correspond dépend de la charge M et de la longueur développée L. Pour un déplacement compris entre $C_{\alpha 0}$ et $C_\alpha$ max la vitesse se situe sur la courbe 81, la courbe 82 ou une courbe intermédiaire telle que 83 suivant la charge M et la longueur développée L.

La courbe 81 représente $V_\alpha$ demandée pondérée lorsque la longueur développée est minimale et la charge utile est minimale.

La courbe 82 représente $V_\alpha$ demandée pondérée lorsque la longueur développée L est maximale et la charge utile est maximale.

La courbe 83 représente $V_\alpha$ demandée pondérée pour des valeurs intermédiaires de longueur développée et de charge utile.

Le gain entre l'amplitude du déplacement $C_\alpha$ du levier de commande 41 et la vitesse de mouvement demandée est variable entre les faibles vitesses et les grandes vitesses de manière que la précision de réglage des faibles vitesses soit meilleure que celle des fortes vitesses.

Pour augmenter la précision du réglage des faibles vitesses $V_\alpha$ la loi de vitesse peut être à titre d'exemple de la forme :

$$V = AC_\alpha^2 + B$$

où A et B sont des coefficients déterminés de telle sorte que

$$V_\alpha = 0 \text{ pour } C_\alpha = C_\alpha 0$$

et

$$V_\alpha = V_\alpha \max (L, M) \text{ pour } C_\alpha = C_\alpha \max$$

d'où

$$A = \frac{V_\alpha \max (L, M)}{C_\alpha \max^2 - C_\alpha 0^2}$$

et

$$B = - \frac{V_\alpha \max (L, M)}{C_\alpha \max^2 - C_\alpha 0^2} \times C_\alpha 0^2$$

avec

$$V_\alpha \max (L, M) = V_\alpha \max (L \text{ mini}, 0) \times K_\alpha (L) \times K (M)$$

Les lois de vitesses représentées par les courbes 81 ou 82 sont de la forme $AC^2 + B$.

Le réglage de la vitesse entre la vitesse minimale et la vitesse maximale est effectuée par utilisation de toute la course utile du levier de commande correspondant.

De façon analogue, la figure 10 montre la loi de variation de la vitesse $V_\theta$ de l'actionneur 58 du mouvement d'orientation en fonction de l'amplitude $C_\theta$ du mouvement du levier 41 de commande pour les valeurs extrêmes de longueur développée L et de charge M dans le cas de l'échelle précédente prise à titre d'exemple. En ce qui concerne le gain et la course du levier 41, les caractéristiques notées à propos de la figure 9 s'appliquent.

La figure 11 montre la loi de variation de la vitesse $V_L$ de l'actionneur 57 du mouvement de déploiement-reploiement en fonction de l'amplitude $C_L$ du mouvement du levier 42 de commande pour les valeurs extrêmes de charge utile dans le cas de l'échelle précédente. En ce qui concerne le gain et la course du levier 42, les caractéristiques notées à propos de la figure 9 s'appliquent.

En se rapportant à la figure 5, l'organigramme assure le calcul des coefficients de pondération et le calcul des vitesses demandées pondérées.

La figure 12 est un détail de l'organigramme donnant le calcul de la vitesse demandée en fonction de l'amplitude C du déplacement de l'organe de commande, de la charge utile M, de la longueur développée L ou du rayon de giration ρ.

## Revendications

1. Procédé de commande des mouvements d'une échelle (2) sur véhicule (1) comportant une échelle (2) formée de plusieurs éléments pouvant être déployés ou reployés par un premier actionneur (57) et pouvant être dressée ou abaissée, par pivotement autour d'un axe (2a) sensiblement horizontal, par l'intermédiaire d'un deuxième actionneur (59) et orientée, autour d'un axe (3a) sensiblement vertical, par l'intermédiaire d'un troisième actionneur (58) et un système électronique à microprocesseur recevant en entrée les signaux d'un pupitre de commande (4) muni d'organes de commande manuelle dont le sens et l'amplitude (C) de déplacement correspondent respectivement au sens et à la vitesse (V) de mouvement du dressage-abaissement, du déploiement-reploiement et de l'orientation de l'échelle et, au moyen des capteurs, les signaux représentatifs de la charge utile (M) appliquée à l'échelle, de la longueur développée (L), de l'angle de dressage ($\alpha$) et de l'angle d'orientation ($\theta$) et générant en sortie des signaux servant à commander lesdits actionneurs, caractérisé par le fait que le système électronique calcule :

– à partir des signaux desdits capteurs, un premier coefficient de vitesse $K_\alpha$ (L) qui est une fonction décroissante de la longueur développée, un second coefficient de vitesse K (M) qui est une fonction décroissante de la charge utile et un troisième coefficient de vitesse $K_\theta$ ($\rho$) qui est une fonction décroissante du rayon de giration de l'échelle, le rayon de giration étant une fonction de la longueur dévelopée (L) et, de l'angle de dressage ($\alpha$).

– ensuite une valeur de vitesse maximale de dressage-abaissement ($V_\alpha$ max (L, M), à partir d'une première valeur de vitesse maximale prédéterminée en fonction de la longueur développée minimum et de la charge utile minimum et pondérée par lesdits premier et second coefficients ($K_\alpha$ (L), K (M) ;

– une valeur de vitesse maximale d'orientation ($V_\theta$ max ($\rho$, M)) à partir d'une deuxième valeur de vitesse maximale prédéterminée en fonction du rayon de giration minimum et de la charge utile minimum et pondérée par ledit second coefficient ($K_{(M)}$) et ledit troisième coefficient ($K_\theta(\rho)$)

– enfin, des vitesses de commande pour lesdits actionneurs à partir desdits coefficients et desdites vitesses maximales de façon que lesdites vitesses de commande n'excèdent pas les vitesses maximales ainsi calculées.

2. Procédé de commande selon la revendication 1, caractérisé par le fait qu'il consiste à calculer une valeur de vitesse maximale de déploiement-reploiement ($V_{L\ max(M)}$) à partir d'une troisième valeur de vitesse maximale prédéterminée en fonction de la charge utile minimum et pondérée par ledit second coefficient.

3. Procédé de commande selon l'une quelconque des revendications précédentes, caractérisé par le fait que l'amplitude du déplacement ($C_\alpha$, $C_\theta$, $C_L$) de l'organe de commande (41) est liée aux vitesses de commande par une loi de vitesse dont les paramètres sont fonction desdites vitesses maximales calculées.

4. Procédé de commande selon la revendication 3 caractérisé par le fait que la loi de vitesse est telle que le gain entre l'amplitude du déplacement ($C_\alpha$, $C_\theta$, $C_L$) de l'organe de commande (41) et la vitesse de commande correspondante ($V_\alpha$, $V_\theta$, $V_L$) varie entre les faibles vitesses et les grandes vitesses et que la précision de réglage des faibles vitesses soit meilleure que celle des grandes vitesses.

## Ansprüche

1. Verfahren zur Steuerung der Bewegung einer Leiter (2) auf einem Fahrzeug (1), wobei die Fahrzeugleiter aus mehreren Teilen besteht, die aus- oder einfahrbar sind durch eine erste Betätigungsanordnung (57) und die aufrichtbar und absenkbar ist durch Verschwenkung um eine im wesentlich waagrechte Achse (2a) durch eine zweite Betätigungsanordnung (59) und die um eine im wesentlichen senkrechte Achse (3a) verdrehbar ist durch eine dritte Betätigungsanordnung (58), wobei sie eine elektronische Anordnung mit einem Mikroprozessor aufweist, dessen Eingang die Signale eines Steuerpultes (4) zugeführt werden, welches mit manuellen Schaltern versehen ist, wobei die Richtung und die Amplitude der Schalterverschiebungen der Richtung bzw. der Geschwindigkeit (V) der Aufricht- und Absenkbewegungen, dem Aus- und Einfahren und der Verdrehung der Leiter entsprechen, sowie, mittels Fühlern, Signale entsprechend der die Leiter beaufschlagenden Nutzlast (M), der ausgefahrenen Länge (L), dem Aufrichtwinkel ($\alpha$) und dem Verdrehwinkel ($\theta$), wobei am Ausgang Signale erzeugt werden zur Steuerung der Betätigungsanordnungen, dadurch gekennzeichnet, daß die elektronische Anordnung berechnet :

– ausgehend von den Fühlersignalen einen ersten Geschwindigkeitskoeffizienten $K_\alpha$ (L), der eine abnehmende Funktion der Ausfahrlänge ist, einen zweiten Geschwindigkeitskoeffizienten K (M), der eine abnehmende Funktion der Nutzlast ist und einen dritten Geschwindigkeitskoeffizienten $K_\theta$ ($\rho$), der eine abnehmende Funktion des Drehradius der Leiter ist, wobei der Drehradius eine Funktion der ausgefahrenen Länge (L) und des Aufrichtwinkels ($\alpha$) ist ;

– anschließend einen Wert für die Maximalgeschwindigkeit des Aufrichten-Absenkens ($V_\alpha$ max (L, M)) ausgehend von einem ersten Wert für eine vorgegebene Maximalgeschwindigkeit als Funktion der minimalen ausgefahrenen Länge und der minimalen Nutzlast und gewichtet mit dem ersten und dem zweiten Koeffizienten ($K_\alpha$ (L), K (M) ;

– einen Wert für die Maximalgeschwindigkeit der Verdrehung ($V_\theta$ max (ρ, M)) ausgehend von einem zweiten vorgegebenen Wert für die Maximalgeschwindigkeit als Funktion des minimalen Drehradius und der minimalen Nutzlast und gewichtet mit dem zweiten Koeffizienten (K (M)) und dem dritten Koeffizienten ($K_\theta$ (ρ)) ;

– schließlich die Steuergeschwindigkeiten für die Betätigungsanordnungen ausgehend von diesen Koeffizienten und diesen maximalen Geschwindigkeiten, derart, daß diese Steuergeschwindigkeiten nicht die berechneten maximalen Geschwindigkeiten überschreiten.

2. Verfahren zur Steuerung nach Anspruch 1, dadurch gekennzeichnet, daß es darin besteht einen Wert der maximalen Geschwindigkeit des Ausfahrens/Einfahrens ($V_{Lmax\,(M)}$) zu berechnen ausgehend von einem dritten vorgegebenen Wert der maximalen Geschwindigkeit als Funktion der minimalen Nutzlast gewichtet mit dem zweiten Koeffizienten.

3. Verfahren zur Steuerung nach einem der vorhergehenden Ansprüche, dadurch gekennzeichnet, daß die Verschiebeamplitude ($C_\alpha$, $C_\theta$, $C_L$) des Steuerteils (41) mit den Steuergeschwindigkeiten verbunden ist durch eine Geschwindigkeitsbeziehung, deren Parameter eine Funktion der genannten berechneten Maximalgeschwindigkeiten sind.

4. Verfahren zur Steuerung nach Anspruch 3, dadurch gekennzeichnet, daß die Geschwindigkeitsbeziehung derart gewählt ist, daß das Verhältnis zwischen Verschiebeamplitude ($C_\alpha$, $C_\theta$, $C_L$) des Steuerteils (41) und der zugehörigen Steuergeschwindigkeit ($V_\alpha$, $V_\theta$, $V_L$) variiert zwischen den kleinen und den großen Geschwindigkeiten und daß die Regelgenauigkeit der kleinen Geschwindigkeiten besser ist als diejenige der großen Geschwindigkeiten.

## Claims

1. A method for controlling the movements of a ladder (2) mounted on a vehicle (1), comprising a ladder (2) formed by a plurality of members which can be extended or retracted by a first actuator (57) and can be raised or lowered by pivoting about a substantially horizontal axis (2a) by a second actuator (59) and oriented about a substantially vertical axis (3a) by a third actuator (58), and an electronic microprocessor system receiving as input signals from a control panel (4) provided with manual control members whose direction and amplitude (C) of displacement correspond respectively to the direction and speed (V) of movement for the raising-lowering, extension-retraction and orientation of the ladder and, by means of sensors, signals representing the working load (M) applied to the ladder, the extended length (L), the angle of erection (α) and the angle of orientation (θ) and generating as output signals designed to control these actuators, characterized in that the electronic system calculates :

– from the signals from the sensors, a first speed coefficient $K_\alpha$ (L) which is a decreasing function of the extended length, a second speed coefficient K (M) which is a decreasing function of the working load and a third speed coefficient $K_\theta(\rho)$ which is a decreasing function of the radius of gyration of the ladder, the radius of gyration being a function of the extended length (L) and the erection angle (α) ;

– a maximum raising-lowering speed value ($V_\alpha$ max (L, M) from a first maximum speed value predetermined as a function of the minimum extended length and minimum working load and weighted by the first and second coefficients ($K_\alpha$ (L), K (M)) ;

– a maximum orientation speed value ($V_\theta$ max (ρ, M) from a second maximum speed value predetermined as a function of the minimum radius of gyration and the minimum working load and weighted by the said second (K (M)) and third ($K_\theta(\rho)$) coefficients

– finally, control speeds for the actuators from these coefficients and maximum speeds so that these control speeds do not exceed the maximum speeds calculated in this way.

2. A control method as claimed in claim 1, characterized in that it consists in calculating a maximum extension-retraction speed value ($V_{L\,max\,(M)}$) from a third maximum speed value predetermined as a function of the minimum working load and weighted by the second coefficient.

3. A control method as claimed in any one of the preceding claims, characterized in that the amplitude of the displacement ($C_\alpha$, $C_\theta$, $C_L$) of the control member (41) is linked to the control speeds by a speed law whose parameters are a function of the maximum speeds calculated.

4. A control method as claimed in claim 3, characterized in that the speed law is such that the gain between the amplitude of the displacement ($C_\alpha$, $C_\theta$, $C_L$) of the control member (41) and the corresponding con-

trol speed ($V_\alpha$, $V_\theta$, $V_L$) varies between low speeds and high speeds and in that the low speeds can be adjusted with greater accuracy than the high speeds.

FIG.2

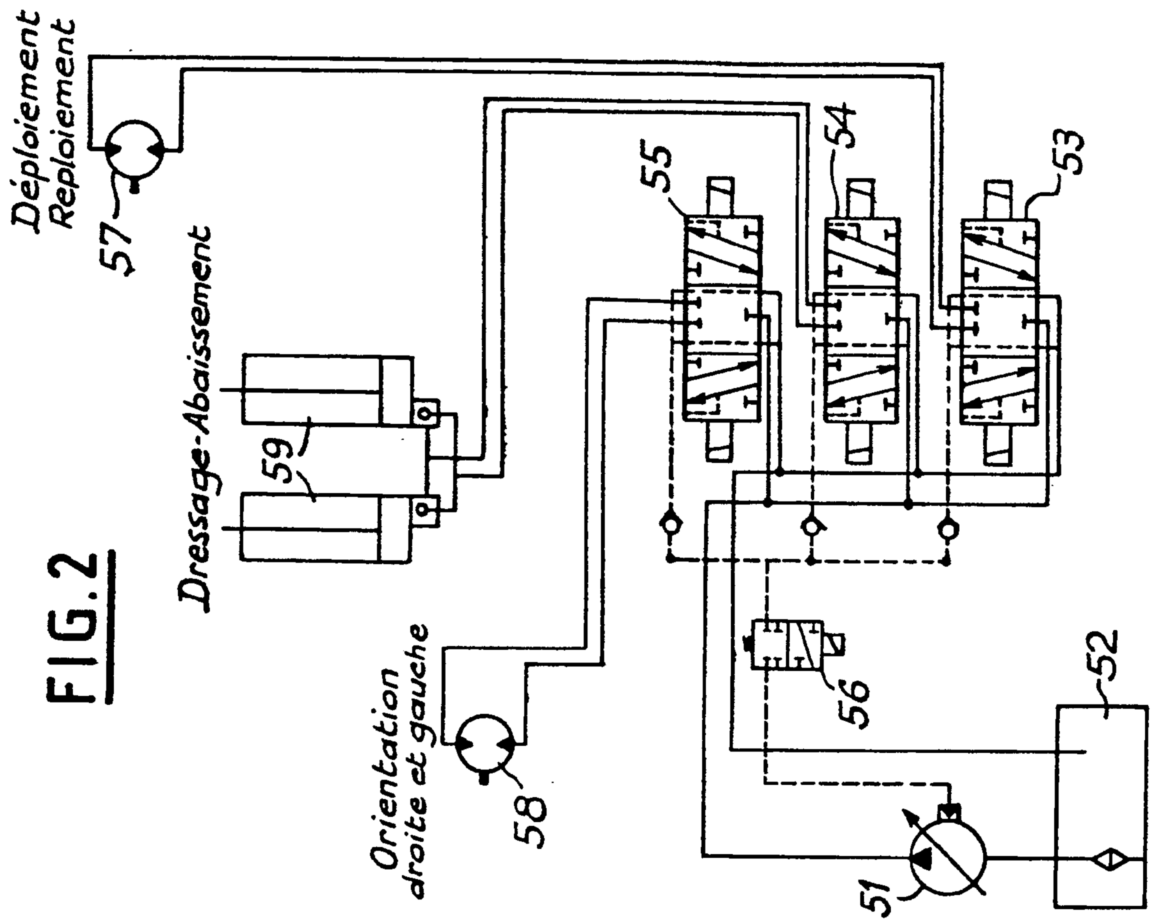
Déploiement
Reploiement
57
Dressage-Abaissement
59
55
54
53
56
52
51
58
Orientation
droite et gauche

FIG.1

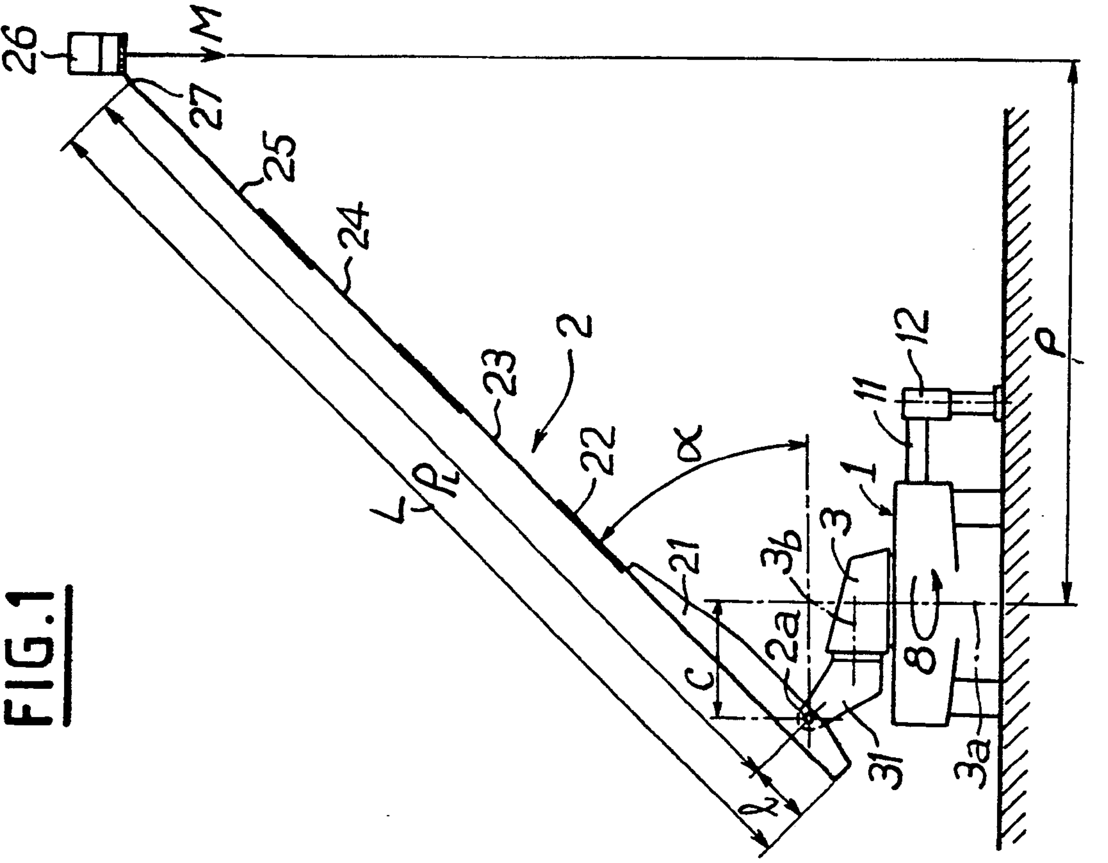
26
M
27
25
24
23
2
22
α
21
3b
3
1
11
12
P
L
R
C
2a
8
31
3a
l

FIG. 3

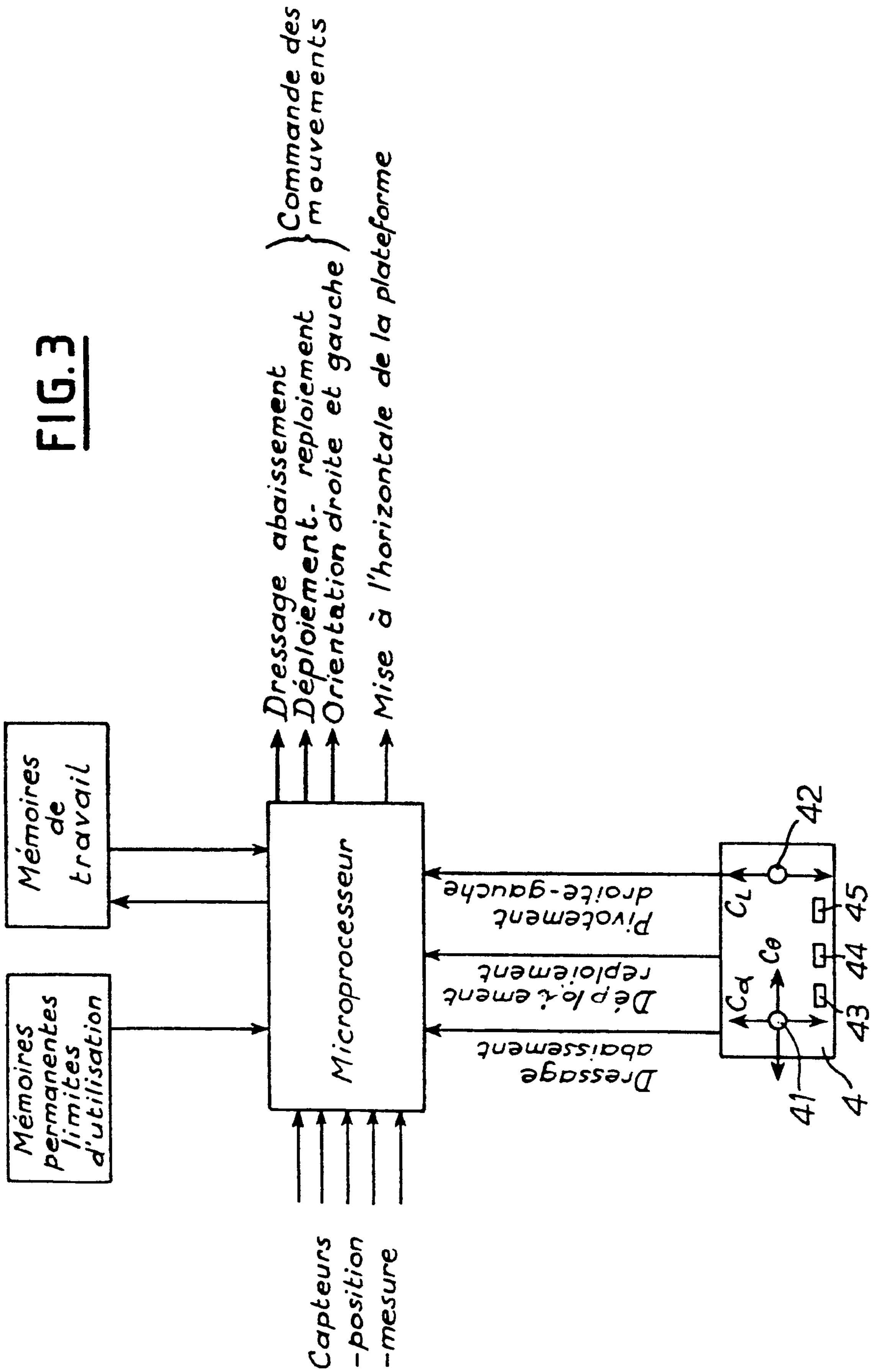
Mémoires permanentes limites d'utilisation
Mémoires de travail
Microprocesseur
Dressage abaissement
Déploiement. reploiement
Orientation droite et gauche
Mise à l'horizontale de la plateforme
Commande des mouvements
Dressage abaissement
Déploiement reploiement
Pivotement droite-gauche
Capteurs
-position
-mesure
$C_\alpha$
$C_\theta$
$C_L$
41
42
43
44
45
4

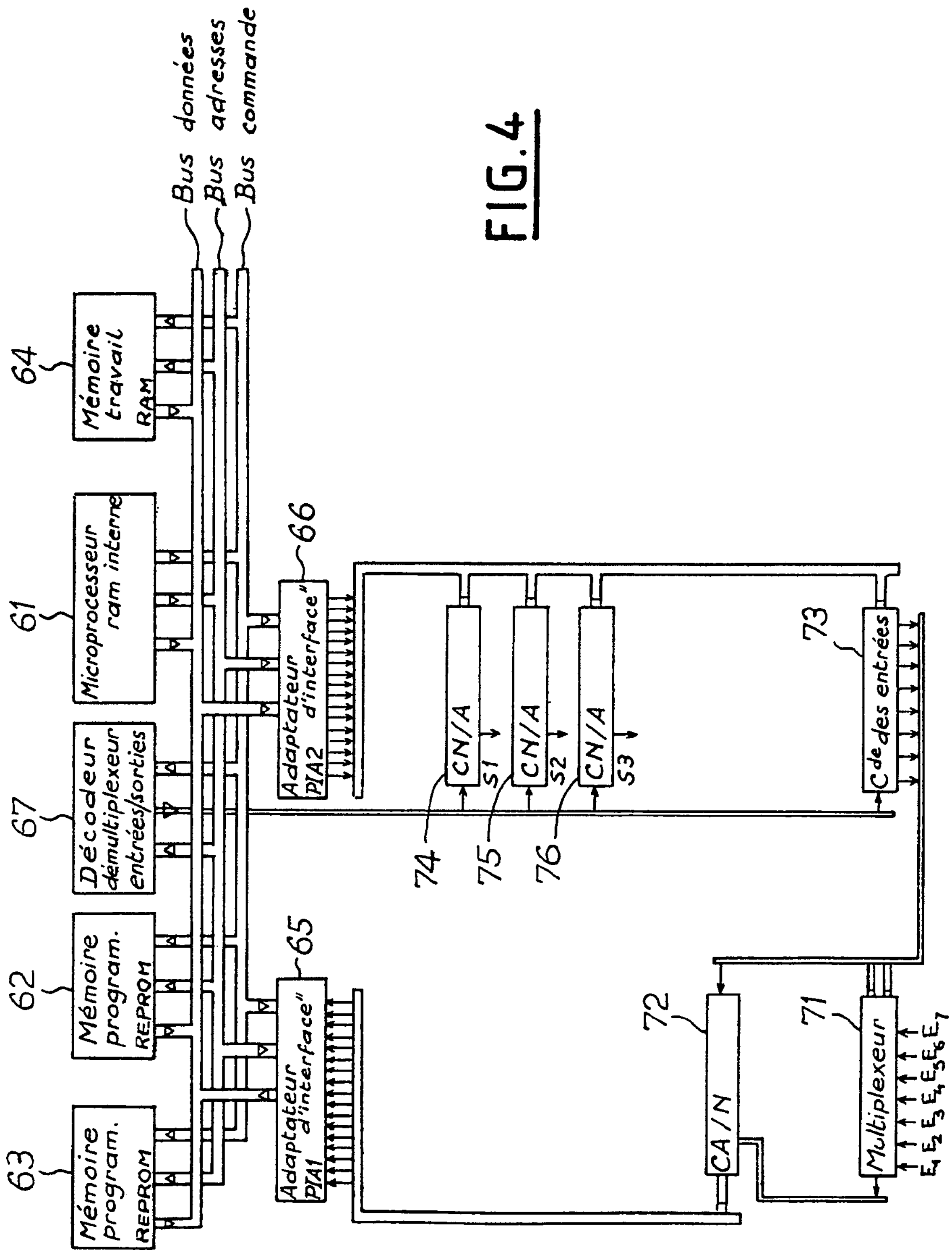

Bus données
Bus adresses
Bus commande
64
Mémoire travail RAM
61
Microprocesseur ram interne
67
Décodeur démultiplexeur entrées/sorties
62
Mémoire program. REPROM
63
Mémoire program. REPROM
66
Adaptateur d'interface" P/A2
65
Adaptateur d'interface" P/A1
CN/A
S1
CN/A
S2
CN/A
S3
74
75
76
73
C de des entrées
72
CA/N
71
Multiplexeur
E1 E2 E3 E4 E5 E6 E7


FIG. 4

FIG.5

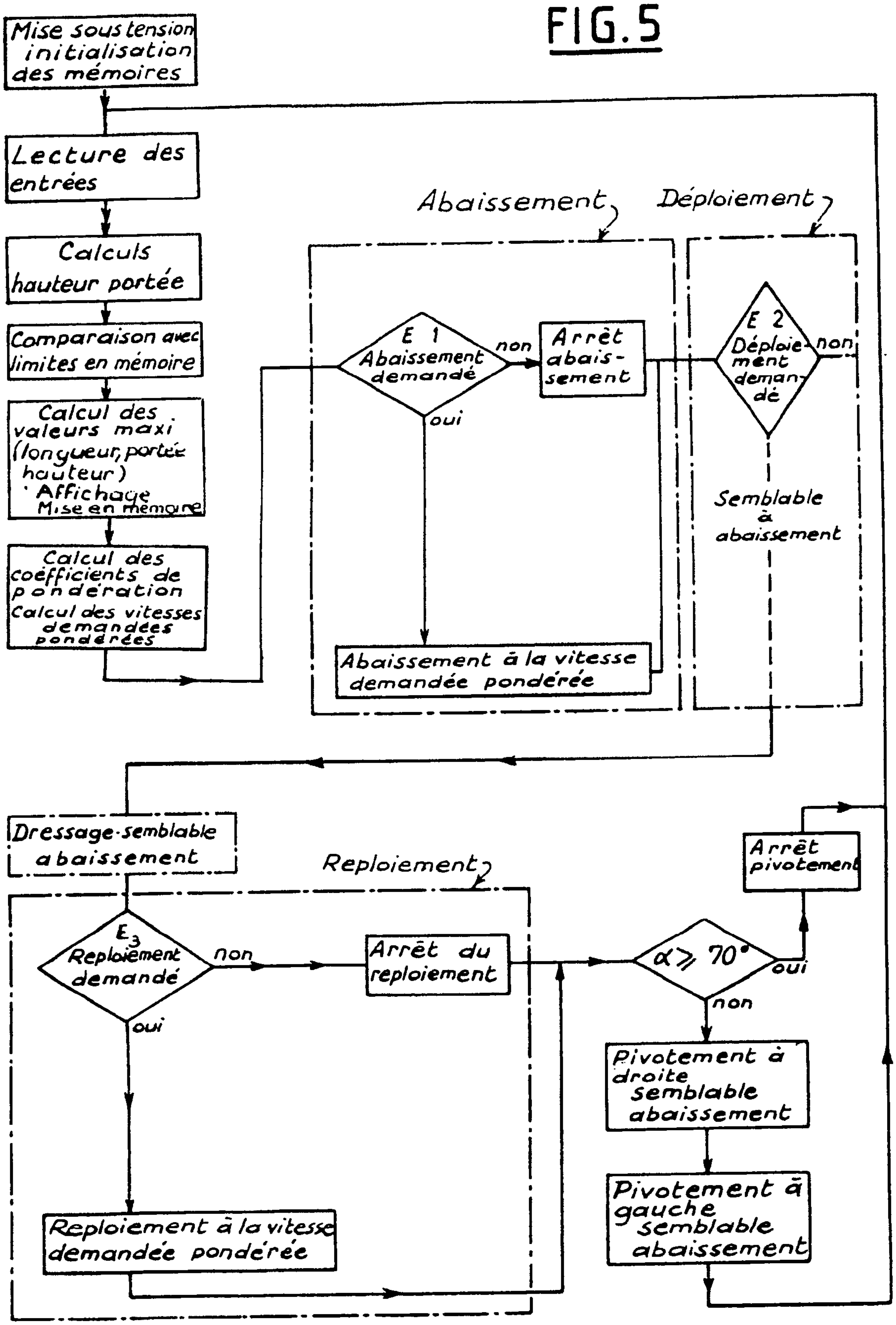
Mise sous tension initialisation des mémoires
Lecture des entrées
Calculs hauteur portée
Comparaison avec limites en mémoire
Calcul des valeurs maxi (longueur, portée hauteur)
Affichage
Mise en mémoire
Calcul des coefficients de pondération
Calcul des vitesses demandées pondérées
Abaissement
Déploiement
E 1 Abaissement demandé
non
oui
Arrêt abais-sement
Abaissement à la vitesse demandée pondérée
E 2 Déploie-ment deman-dé
non
Semblable à abaissement
Dressage semblable abaissement
Reploiement
E3 Reploiement demandé
non
oui
Arrêt du reploiement
Reploiement à la vitesse demandée pondérée
α ≥ 70°
oui
non
Arrêt pivotement
Pivotement à droite semblable abaissement
Pivotement à gauche semblable abaissement

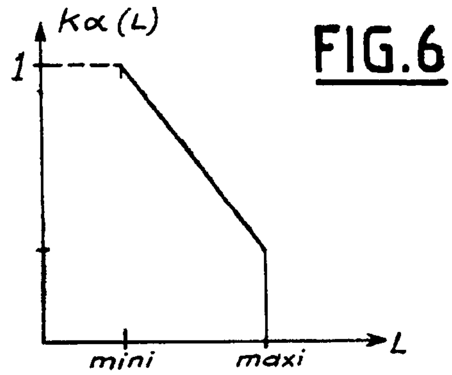


FIG.6

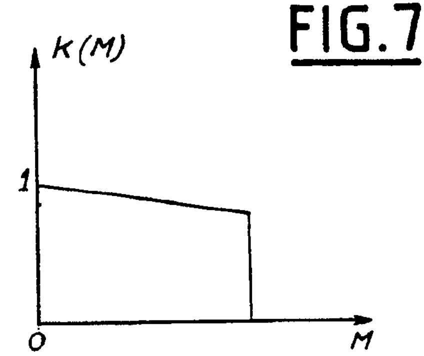


FIG.7

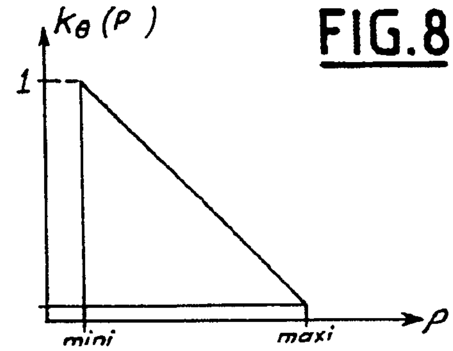


FIG.8

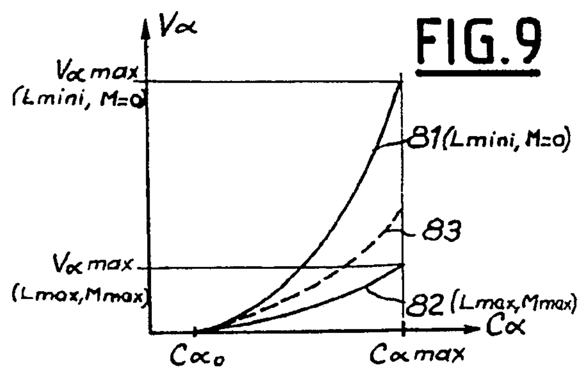


FIG.9

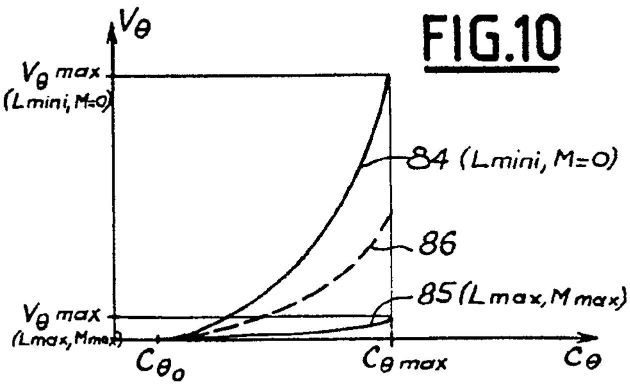


FIG.10

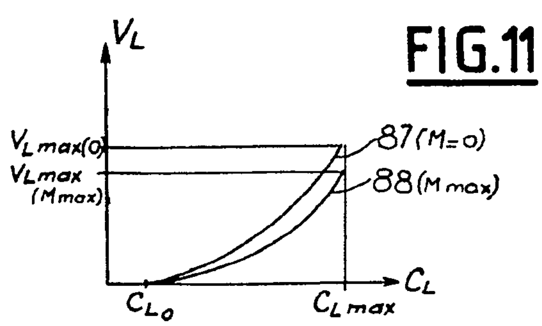


FIG.11

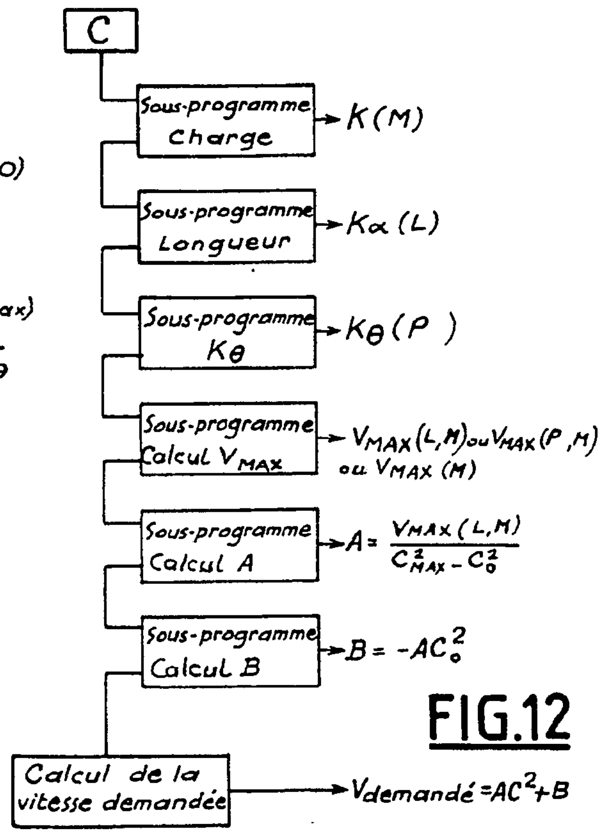


FIG.12